# EUROPÄISCHE PATENTANMELDUNG

(11) **EP 0 969 262 A2**
(43) Veröffentlichungstag der Anmeldung: **05.01.2000**
(21) Anmeldenummer: 99108302.3
(22) Anmeldetag: 28.04.1999
(51) Int. Cl.: F41A 23/56, F41A 23/34

(54) **Vorrichtung für militärische Fahrzeuge zur Abstützung**

(30) Priorität: 04.07.1998 DE 19829973
(71) Anmelder: MaK System Gesellschaft mbH, 24159 Kiel (DE)
(72) Erfinder: Bruhn, Ralf, 24796 Bredenbek (DE)
(74) Vertreter: Hansmann, Dierk, Dipl.-Ing.

(57) **Zusammenfassung**

Bei einer derartigen Vorrichtung zur Abstützung über einstellbare Stützen, die drehbeweglich über eine waagerechte Achse in fahrzeugfesten Lagern angeordnet sind, wird eine Notauslösevorrichtung zum schnellen Anheben der Stützen vorgeschlagen. Hierzu besitzt jede Stütze ein Knickgelenk, wobei eine achsparallele Lagerstelle zur fahrzeugfesten Stützlagerung ausgebildet ist. Das Knickgelenk wird über einen eingesetzten Bolzen verriegelt, der in korrespondierende Führungen an Teilen der Stütze eingreift. Über Zugelemente wird der Bolzen zur Entriegelung herausgezogen und die abgeknickte Stütze angehoben.

## Beschreibung

Die Erfindung bezieht sich auf eine Vorrichtung für militärische Fahrzeuge mit Arbeitseinrichtungen und/oder schwere Waffen zur Abstützung auf dem Untergrund über höhenveränderliche einstellbare Stützen, die drehbeweglich über eine waagerechte Achse in fahrzeugfesten Lagern angeordnet sind.

Derartige Ausbildungen sind bekannt, um bei stehendem Fahrzeug einen Funktionseinsatz ohne eine unzulässigen Schieflage zu ermöglichen. Dabei werden bei ausgefahrener Stütze erhöhte Lastkräfte und -momente von dem Fahrzeug bei Umgehung bzw. Entlastung des Fahrwerks aufgenommen. Das Ausfahren und Anpressen der Stützen auf den Boden wird mittels hydraulischer oder elektrischer Hilfskraft oder auch manuell handbetätigt durchgeführt. Bei elektrischem oder manuellem Antrieb wird eine Spindel verwendet, mit der die Stütze aus- und einfahrbar ist. Bei diesen militärischen Fahrzeugen ist es erforderlich, die Abstützung nach einem Funktionseinsatz, zum Beispiel nach einer Schußabgabe, schnell einzufahren, damit das Fahrzeug seine Stellung wechselt und aus einem Gefahrenbereich entfernt wird.

Aufgabe der Erfindung ist es, für eine gattungsgemäße Ausbildung eine Notlösevorrichtung für die Stützen zu schaffen, die mit wenigen Handgriffen und auch bei Ausfall von Hilfskraftenergie schnell vom Boden zu lösen und einzufahren ist, ohne das Fahrzeug in seiner Fahrbewegung zu behindern.

Die Lösung dieser Aufgabe erfolgt erfindungsgemäß dadurch, daß jede Stütze über ein Knickgelenk zweigeteilt und achsparallel zur fahrzeugfesten Stützlagerung ausgebildet ist sowie das Knickgelenk über einen eingesetzten Bolzen, der in korrespondierende Führungen an Teilen der Stütze einsetzbar und damit verriegelbar ist, wobei der Bolzen über Zugelemente herausziehbar und die abgeknickte Stütze anhebbar ist.

Hierdurch wird über das Gelenk mit einer Verriegelung die Stützkraft auf den Boden übertragen und im Notfall die Verriegelung mittels Zugelemente gelöst und die Stütze angehoben.

Die Vorteile der Anordnung liegen in der einfachen manuellen Betätigung mittels Zugelemente. Die Auslösung erfolgt schnell und direkt und wird von der Anpreßkraft der Stütze nach der Auslenkung unterstützt. Im normalen Stützbetrieb ist die Verriegelung praktisch momentenfrei, da der Kraftverlauf durch das Gelenk geht.

Weitere vorteilhafte Ausgestaltungen sind durch die Merkmale der Unteransprüche gekennzeichnet.

Die Sicherung des Verriegelungsbolzens erfolgt mit einem Sicherungshebel, der mittels Vorspannkraft auf einen Hahn und damit auf den Bolzen wirkt. Die Sicherung ist einfach und sicher ausgeführt und die Vorspannkraft ist einstellbar. Beim Lösen der Sicherung schnappt der Hahn automatisch auf und gibt den Bolzen frei, der dann herausziehbar ist.

Diese Notlöseeinrichtung ermöglicht der Besatzung im Notfall eine schnelle Entriegelung und ein Anheben der Stützen, so daß sich die Besatzung mitsamt Fahrzeug in Deckung begeben kann. Bei dieser Notlöseeinrichtung wird somit im Einsatzfall kein Bauteil beschädigt oder abgesprengt und die Vorrichtung ist nach erneuter Verriegelung der Stütze ohne Einschränkung wieder einsetzbar.

In der Zeichnung ist ein Ausführungsbeispiel der Erfindung schematisch dargestellt. Es zeigen:

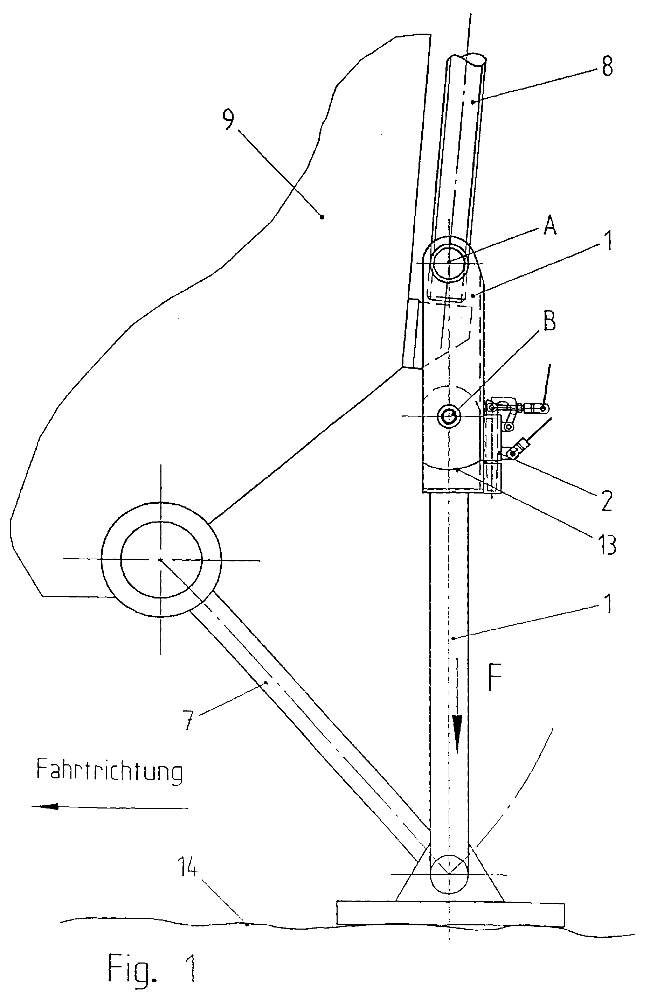

- Fig. 1: eine Vorrichtung im verriegelten Zustand in der Abstützposition,

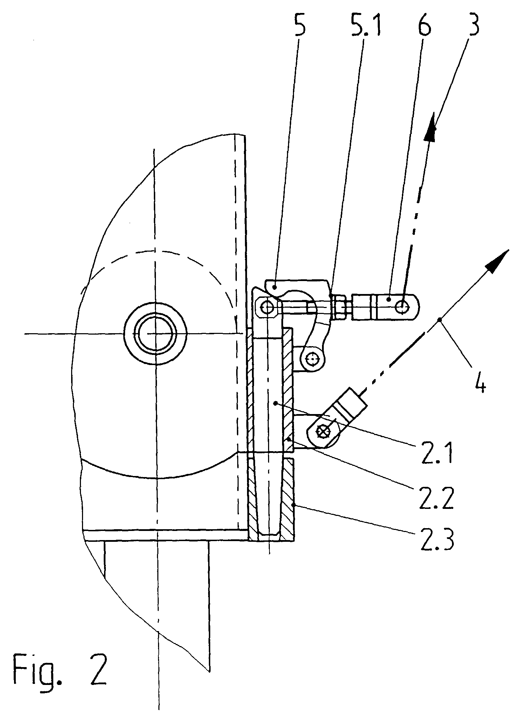

- Fig. 2: eine vergrößerte Darstellung einer Vorrichtung der Fig. 1,
- Fig. 3 und 4: eine Vorder- und Seitenansicht der Verriegelungselemente in der entriegelten Position **und**
- Fig. 5: eine Vorrichtung in der angehobenen Position nach der Notentriegelung.

Bei der dargestellten Anordnung ist eine zweiteilige Stütze 1 über eine Lagerung A schwenkbar über eine Spindelmutter 12 am Fahrzeuggehäuse 9 angeordnet und in diesen Fall zusätzlich über einen Lenker 7 zwischen Fahrzeuggehäuse und den unteren Teil der Stütze 1 gehalten und geführt.

Im normalen Einsatz wird die Stütze 1 zwischen einer Transportposition und einer Abstützposition verfahren, wobei die Spindel 8 über die Spindelmutter 12 auf die Stütze 1 wirkt. In der Abstützposition wird der untere Teil der Stütze 1 auf den Boden 14 zur Entlastung des Fahrwerks und Festlegung sowie Abstützung des Fahrzeugs aufgesetzt.

Hierbei ist die Stütze 1 mit ihrem oberen Teil mit der Lagerung A zur Bildung einer waagerechten Achse an der Spindelmutter 12 und Spindel 8 fahrzeugfest gelagert. Ferner ist zwischen den Teilen der Stütze 1 ein Knickgelenk B mit einer zugeordneten Verriegelungseinrichtung 2 angeordnet, so daß die Stütze 1 und das Gelenk B eine Stützkraft F auf den Boden 14 in der verriegelten Normalstellung überträgt. Hierzu wird ein Verriegelungsbolzen 2.1 in der gestreckten Lage der Teile der Stütze 1 in entsprechend zugeordneten Führungen 2.2, 2.3 gehalten. Der Verriegelungsbolzen 2.1 ist in dieser Position durch einen gabelförmigen Hahn blockiert. Hierzu ist ein drehbar im oberen Teil des Bolzens 2.1 gelagerter Sicherungshebel 6 in waagerechter Position angeordnet und durchdringt mittig den gabelförmigen Hahn 5, der ebenfalls um eine Achse drehbar am Gehäuse der Führung 2.2 gelagert ist. Der Sicherungshebel 6 liegt in waagerechter Position in einer Vertiefung 5.1 des Hahns 5, so daß eine Selbsthemmung vorhanden ist. Der Sicherungshebel 6 hält den Hahn 2 in seiner Verriegelungsposition, wobei das freie Ende des Hahns 5 mit seiner Ausformung auf dem oberen Ende des Verriegelungsbolzens 2.1 liegt und diesen in seiner Position festhält.

An dem Gehäuse der Bolzenführung 2.2 und an dem Sicherungehebel 6 sind jeweils Betätigungsseile 3 und 4 angelenkt, um eine Entriegelung und ein Anheben der Stütze 1 durchzuführen. In der verriegelten Stützposition wird eine Stützkraft F vom Fahrzeug über die Lagerung A und das Gelenk B der Stütze 1 bis auf den abstützenden Boden 14 übertragen.

Zur Entlastung der Knickgelenklagerung B sind ausgeformte Paßflächen 13 an den korrespondierenden Stützenteilen der Stütze 1 ausgebildet, die große Stützkräfte F bei Belastung der Stütze 1 aufnehmen können.

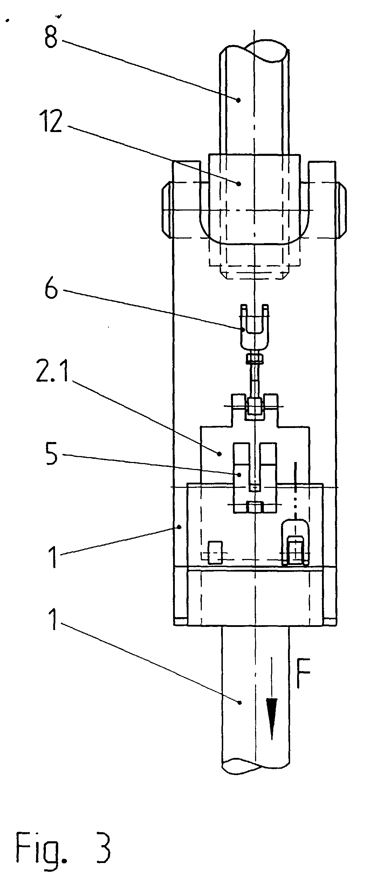

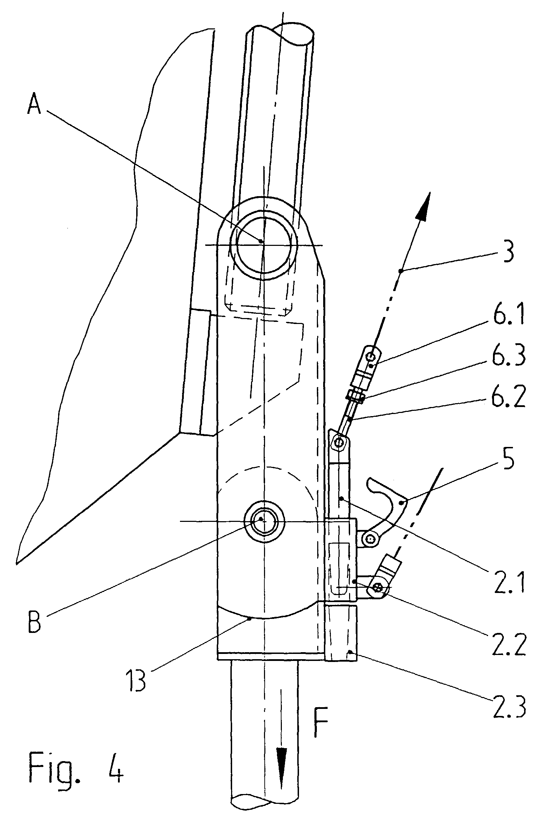

In den Figuren 3 und 4 ist die Stütze 1 in entriegelter aber nicht ausgelenkter bzw. angehobener Position dargestellt. Der Sicherungshebel 6 wird dabei mittels Zugkraft über das Betätigungsseil 3 aus der verriegelnden Position gezogen, wobei der Hahn 5 freigegeben und anschließend der Verriegelungsbolzen 2.1 aus den Führungen 2.3 herausgezogen wird. Damit ist die Verriegelung der Teile der Stütze 1 gelöst.

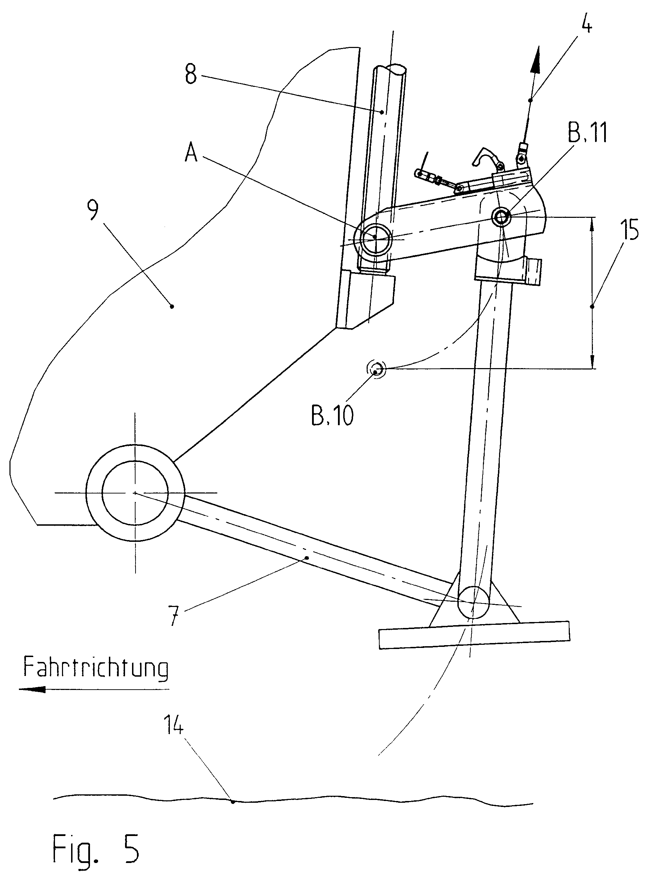

Gemäß Figur 5 ist die Stütze 1 in entriegelter und angehobener Position gezeigt. Mittels Betätigungsseil 3 ist die Verriegelung 2 gelöst, so daß der Bolzen 2.1 nach oben aus der Führung 2.3 herausgezogen und das Gelenk B knickbar ist. Über den Seilzug 4 wird die Stütze 1 ausgelenkt und bei Drehung um die Lagerung A im Gelenk B um einen durch die Geometrie bestimmbaren Höhenabstand 15 angehoben. Dabei wird der Gelenkpunkt B aus einer Position 10 auf einer kreisförmigen Bahn in die Position 11 angehoben.

Im Notfall kann somit die Verriegelung mittels des Betätigungsseiles 3 gelöst und die Stütze 1 mit dem Betätigungsseil 4 angehoben. Das Betätigungsseil 3 löst die Verriegelung 2. Der Sicherungshebel 6 ist mittels der Einstellschraube 6.3 verstellbar, so daß der Hahn 5 über eine Vorspannkraft auf den Bolzen 2.1 wirkt. Da der Sicherungshebel 6 in einer Vertiefung 5.1 am Rücken des Hahns 5 liegt, wird ein ungewolltes Lösen der Verriegelung 2 verhindert. Beim Lösen der Sicherung schnappt der Hahn 5 automatisch auf und gibt den Bolzen 2.1 als Verriegelung frei, der dann herausgezogen wird.

Die Notlöseeinrichtung kann einfach von Hand über die Betätigungsseile 3, 4 betätigt werden. Die Notlösung erfolgt schnell und direkt und wird von der Anpreßkraft auf den Boden nach einer gewissen Auslenkung unterstützt. Im normalen Stützbetrieb ist die Verriegelung 2 praktisch momentenfrei, da der Kraftverlauf durch das Gelenk B geht.

## Patentansprüche

1. Vorrichtung für militärische Fahrzeuge mit Arbeitseinrichtungen und/oder schwere Waffen zur Abstützung auf dem Untergrund über höhenveränderliche einstellbare Stützen, die drehbeweglich über eine waagerechte Achse in fahrzeugfesten Lagern angeordnet sind, dadurch gekennzeichnet, daß jede Stütze (1) über ein Knickgelenk (B) zweigeteilt und achsparallel zur fahrzeugfesten Stützlagerung (A) ausgebildet ist sowie das Knickgelenk (B) über einen eingesetzten Bolzen (2.1), der in korrespondierende Führungen (2.2, 2.3) an Teilen der Stütze (1) einsetzbar und damit verriegelbar ist, wobei der Bolzen (2.1) über Zugelemente (3, 4) herausziehbar und die abgeknickte Stütze (1) anhebbar ist.

2. Vorrichtung nach Anspruch 1, dadurch gekennzeichnet, daß der Bolzen (2.1) mittels eines Hahns (5) und einem zugeordneten Sicherungshebel (6) in seiner verriegelten Position festsetzbar ist.

3. Vorrichtung nach Anspruch 1 oder 2, dadurch gekennzeichnet, daß das Zugelement (3) am Sicherungshebel (6), der mit dem Bolzen (2.1) verbunden ist, angreift und der zugeordnete vorgespannte Hahn (5) über das Zugelement (3) entriegelbar sowie der Bolzen (2.1) aus der Führung (2.3) des untenliegenden Teils der Stütze (1) zum Einknicken des Knickgelenkes (B) herausziehbar ist und das weitere Zugelement (4) zum Anheben am oberen Teil der Stütze (1) angreift.

4. Vorrichtung nach einem der Ansprüche 1 bis 3, dadurch gekennzeichnet, daß die Zugelemente (3, 4) durch Zugseile gebildet sind.

5. Vorrichtung nach einem der Ansprüche 1 bis 4, dadurch gekennzeichnet, daß die geteilte Stütze (1) im Gelenkbereich paßgenaue gegeneinander bewegliche Flächen (13) zur Stützkraftaufnahme aufweist.

6. Vorrichtung nach einem der Ansprüche 1 bis 5, dadurch gekennzeichnet, daß der mit dem Bolzen (2.1) verbundene Sicherungshebel (6) in der Verriegelungsposition mit einer Ausformung in einer Vertiefung (5.1) einer Außenseite des gabelförmig ausgeführten und bei Ausnutzung einer vorhandenen Elastisität vorgespannten Hahns (5) liegt und diesen mittig nach außen durchdringt sowie der Hahn (5) mit seinem Hebelende den Bolzen (2.1) fixiert.

7. Vorrichtung nach einem der Ansprüche 1 bis 6, dadurch gekennzeichnet, daß der Sicherungshebel aus einem Gabelkopf (6.1), einer Gelenkstange (6.2) und einer Einstellmutter (6.3) bzw. einem Federpaket besteht, der sich am Gabelkopf abstützt und die Einstellmutter (6.3) oder das Federpaket zur Einstellung einer Vorspannung des Hahns (5) auf das Ende des Bolzens (2.1) einwirkt.

8. Vorrichtung nach einem der Ansprüche 1 bis 7, dadurch gekennzeichnet, daß das Zugelement (3) am nach außen stehenden Ende des Sicherungshebels (6) angelenkt und das weitere Zugelement (4) am unteren Endes des oberen Teils der Stütze (1) bzw. am unteren Teil der Führung (2.2) angelenkt ist.

9. Vorrichtung nach einem der Ansprüche 1 bis 8, dadurch gekennzeichnet, daß die Stütze (1) über einen Lenker (7) zwischen Stütze (1) und Fahrzeuggehäuse (9) geführt ist.
